# EUROPEAN PATENT SPECIFICATION

(11) **EP 3 169 894 B1**
(45) Date of publication and mention of the grant of the patent: **02.09.2020**
(21) Application number: 15736778.0
(22) Date of filing: 02.07.2015
(51) Int. Cl.: F03D 1/00

(54) **A WIND TURBINE WITH A ROTATING SYSTEM COMPRISING A MAGNETIC COMPONENT**
WINDTURBINE MIT EINEM DREHSYSTEM MIT EINER MAGNETISCHEN KOMPONENTE
ÉOLIENNE À SYSTÈME ROTATIF COMPORTANT UN COMPOSANT MAGNÉTIQUE

(30) Priority: 15.07.2014 DK 201470445
(43) Date of publication of application: 24.05.2017
(73) Proprietor: Vestas Wind Systems A/S, 8200 Aarhus N (DK)
(72) Inventor: THOMSEN, Keld, 8990 Fårup (DK); RASMUSSEN, Lars Vermund, 8000 Århus C (DK); NIELSEN, Arne Overmark, 6940 Lem St. (DK)
(74) Representative: Vestas Patents Department
(86) International application number: PCT/DK2015/050199
(87) International publication number: WO 2016/008491

(56) References cited:
- EP-A1- 2 565 477
- DE-A1-102012 101 593
- US-A1- 2008 292 467
- US-A1- 2009 324 383
- US-A1- 2011 031 756
- US-A1- 2011 140 442

## Description

### FIELD OF THE INVENTION

The present invention relates to a wind turbine comprising a rotating system, such as a bearing system, a gear system, etc. The present invention further relates to suspension of a component at the rotating system of the wind turbine.

### BACKGROUND OF THE INVENTION

It is sometimes desirable to attach components, such as lubrication systems, sensors, cables, pipes, etc., at a rotating system of a wind turbine. Such rotating systems comprise a first part and a second part which perform rotating movements relative to each other.

Previously components have been attached to rotating systems by fixing the component onto one of the parts of the rotating system, e.g. by means of bolting, welding, soldering, etc. This may be difficult, especially if the component needs to be retrofitted in an existing wind turbine. Furthermore, a tight connection is only obtained between the component and the part of the rotating system which the component is attached to.

EP2565477 discloses a bearing system for a wind turbine wherein a rotatable scraper passes a stationary scraper once per revolution whereby the stationary scraper scrapes off the grease from the rotatable scraper.

### DESCRIPTION OF THE INVENTION

It is an object of the invention to provide a wind turbine according to claim 1.

It is an object of embodiments of the invention to provide a wind turbine comprising a rotating system, where components can be suspended at the rotating system in an easy manner.

It is a further object of embodiments of the invention to provide a wind turbine comprising a rotating system, where components can be easily retrofitted at the rotating system.

It is an even further object of embodiments of the invention to provide a wind turbine comprising a rotating system, where a component can be suspended at the rotating system in tight abutment with a first part of the rotating system, as well as with a second part of the rotating system.

The invention provides a wind turbine comprising a rotating system, the rotating system comprising:
- a first part and a second part being arranged to rotate relative to each other, and
- a component comprising at least one magnet, said component being attached to the rotating system in such a manner that the component moves along with the first part while sliding along the second part in abutment with the second part, due to magnetic forces provided by the at least one magnet.

The invention relates to a wind turbine comprising a rotating system. The rotating system comprises a first part and a second part being arranged to rotate relative to each other. This may be obtained by the first part being stationary, while the second part rotates, by the second part being stationary, while the first part rotates, or by the first part as well as the second part performing rotating movements, but in such a manner that a relative rotation occurs between the first part and the second part.

The rotating system further comprises a component, which comprises at least one magnet. The component is attached to the rotating system in such a manner that it moves along with the first part while sliding along the second part. The component is arranged in abutment with the second part, due to magnetic forces provided by the at least one magnet.

Since the component moves along with the first part of the rotating system, it moves relative to the second part of the rotating system.

Due to the one or more magnets of the component it is ensured that the component can easily be mounted at the rotating system. Furthermore, it is ensured that a tight connection is established between the component and the part of the rotating system, which the component moves relative to. Thus, the component slides, in tight abutment, along a surface defined on the second part of the rotating system.

At least one of the magnet(s) may be a permanent magnet. Alternatively or additionally, at least one of the magnet(s) may be an electromagnet.

The rotating system may be a bearing system. In this case the rotating system may advantageously be a sliding bearing system, in which sliding surfaces are defined on the first part and the second part, the sliding surfaces sliding along each other, when the first part and the second part rotate relative to each other. As an alternative, the bearing may be another kind of bearing, such as a roller bearing, a ball bearing, a plain bearing, a friction bearing, etc.

According to one embodiment, the rotating system may be a yaw system. In the present context the term 'yaw system' should be interpreted to mean a system which interconnects a wind turbine tower and a nacelle in such a manner that the nacelle is capable of performing rotating movements relative to the tower, thereby allowing the rotor of the wind turbine to be directed into the wind. A yaw system often comprises a toothed yaw ring attached to an upper part of the wind turbine tower, and a number of claw beams mounted on a lower part of the nacelle, the claw beams being arranged in engagement with the toothed yaw ring in such a manner that the claw beams slide along the yaw ring during yawing operation.

In this case the first part of the rotating system may advantageously be one or more of the claw beams, and the second part of the rotating system may be the yaw ring. In this case the component is mounted in such a manner that it moves along with the claw beams during yawing operation, while it slides along one or more surfaces of the yaw ring. Furthermore, the component is kept in close abutment with the sliding surface(s) of the yaw ring by means of the at least one magnet of the component.

As an alternative, the rotating system may be a pitch system. In the present context the term 'pitch system' should be interpreted to mean a system which connects a wind turbine blade to a wind turbine hub in such a manner that the wind turbine blade is allowed to rotate about a longitudinal axis of the blade, in order to adjust an angle of attack between the incoming wind and the wind turbine blade.

As another alternative, the rotating system may be a main bearing system. In the present context the term 'main bearing system' should be interpreted to mean a bearing which supports a main axle of the wind turbine, the main axle interconnecting a wind turbine rotor and a drive train of the wind turbine.

As an alternative to being a bearing system, the rotating system may be or form part of a gear system or a generator system. Such systems are also provided with a first part and a second part being arranged to rotate relative to each other.

The component may be or form part of a lubrication system for providing lubrication to the rotating system. According to this embodiment, the lubrication system, or at least a part of the lubrication system for the rotating part, is mounted at the rotating part in such a manner that it rotates along with one of the parts, while it slides along the other part, in close abutment with the other part. Thereby it is ensured that lubrication is properly provided on the sliding surface(s) of the second part of the rotating system.

The lubrication system may comprise nozzles for directing lubricant directly onto one or more sliding surfaces of the rotating system. According to this embodiment, it is ensured in an even better way that lubricant is directed properly onto the sliding surface(s). The lubrication system may comprise nozzles for directing lubricant directly onto two or more sliding surfaces of the rotating system. According to this embodiment, all sliding surfaces can be lubricated properly, simultaneously, and in an easy manner.

The lubrication system may comprise two or more components and a lubricant container fluidly connected to each of the two or more components in order to supply lubricant to each of the components. According to this embodiment, the single lubricant container supplies lubricant to a number of components. The components may, e.g., be arranged equidistantly around the circumference of the rotating system. For instance, four components may be arranged at the rotating system with 90° spacing between adjacent components. According to this embodiment, it is ensured that the rotating system receives sufficient lubricant along the entire circumference of the rotating system, even if the relative rotations between the first part and the second part are not in the form of full turns, i.e. rotations through 360°. This is, e.g., often the case in yaw systems.

As an alternative to being or forming part of a lubrication system, the component may be or comprise a sensor device. The sensor device may, e.g., be adapted to measure temperatures of the parts of the rotating system, wear on the parts of the rotating system, loads on the parts of the rotating system, deflections of the parts of the rotating system, deformation of the parts of the rotating system, etc. It is an advantage that a sensor is attached to the rotating system in accordance with the invention, because the tight abutment between the component and the second part of the rotating system allows the sensor to perform reliable measurements with respect to the first part of the rotating system, as well as with respect to the second part of the rotating system. This is in particular an advantage if the sensor is adapted to measure wear on the second part of the rotating system. Furthermore, this is a very easy manner of mounting a sensor at the rotating system, in particular in the case that the sensor is being retrofitted onto the wind turbine.

As another alternative, the component may be or comprise a mounting device for mounting a cable or a tube at the rotating system. This provides a very easy manner of mounting cables or tubes at a rotating system.

The component may be attached to the first part by means of magnetic forces provided by the at least one magnet. According to this embodiment, the component is mounted at the rotating system, purely by means of the magnetic forces provided by the at least one magnet. Accordingly, it is very easy to mount the component at the rotating system. As an alternative, the component may be attached to the first part in any other suitable manner, such as by means of bolts, rivets, screws, welding, soldering, etc., as long as the one or more magnets ensure the abutment between the component and the second part of the rotating system. As another alternative, the component may be attached to the first part by means of magnetic forces as well as by other means, such as bolts, rivets or screws, as long as the one or more magnets ensure the abutment between the component and the second part of the rotating system.

The first part of the rotating system and the second part of the rotating system may be arranged to rotate relative to each other at a speed within the interval 5 minutes per round to 20 minutes per round, such as within the interval 5 minutes per round to 18 minutes per round, such as within the interval 7 minutes per round to 15 minutes per round, such as within the interval 10 minutes per rounds to 12 minutes per round. According to this embodiment, the rotating system is a system which rotates relatively slowly, such as a yaw system, the first stage of a gear system, a direct drive generator, etc.

Alternatively or additionally, the rotating system may have a diameter within the interval 1.0 m to 5.0 m, such as within the interval 1.0 m to 4.0 m, such as within the interval 2.0 m to 2.5 m. According to this embodiment, the rotating system is a relatively large rotating system, such as a yaw system.

The invention further relates to a rotating system for a wind turbine, the rotating system comprising:
- a first part and a second part being arranged to rotate relative to each other, and
- a component comprising at least one magnet, said component being attached to the rotating system in such a manner that the component moves along with the first part while sliding along the second part in abutment with the second part, due to magnetic forces provided by the at least one magnet.

The remarks set forth above regarding the rotating system are equally applicable here.

### BRIEF DESCRIPTION OF THE DRAWINGS

The invention will now be described in further detail with reference to the accompanying drawings in which
Fig. 1 is a perspective view of a yaw system for a wind turbine according to an embodiment of the invention,
Fig. 2 is a detailed view of the yaw system of Fig. 1,
Fig. 3 is a perspective view of a component of the yaw system of Figs. 1 and 2,
Fig. 4 is a perspective view of a component mounted at a rotating system of a wind turbine according to an alternative embodiment of the invention,
Fig. 5 is an exploded view of the component shown in Fig. 4, and
Figs. 6-8 show the component of Fig. 5 from various angles.

### DETAILED DESCRIPTION OF THE DRAWINGS

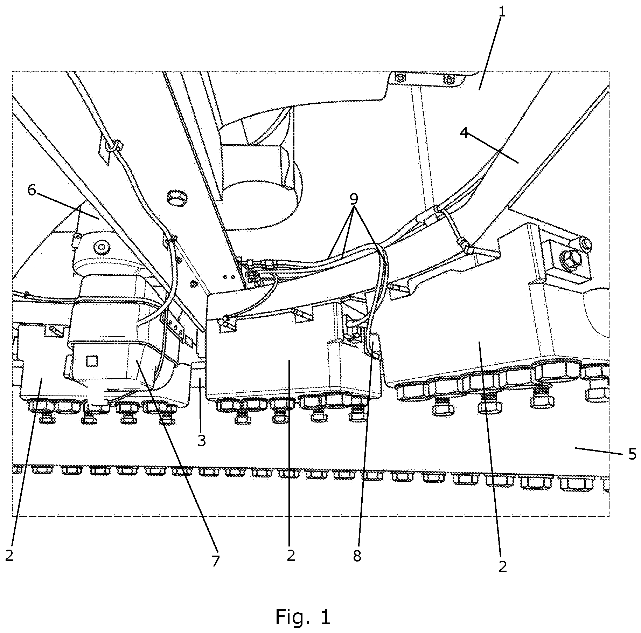

Fig. 1 is a perspective view of a yaw system 1 for a wind turbine according to an embodiment of the invention. The yaw system 1 comprises a first part in the form of a number of claw beams 2, three of which are shown, and a second part in the form of a yaw ring 3. The claw beams 2 are mounted on a lower part 4 of a nacelle, and the yaw ring 3 is mounted on an upper part 5 of a wind turbine tower. Thus, during yawing operation, the claw beams 2 rotate relative to the yaw ring 3, while the claw beams 2 slide along the yaw ring 3.

The yaw system 1 is further provided with a lubrication system comprising a lubricant container 6, a pump 7, a number of components 8, one of which is shown, and a number of tubes 9 interconnecting the lubricant container 6 and the components 8. Lubricant is supplied to each of the components 8, via the tubes 9, and using the pump 7.

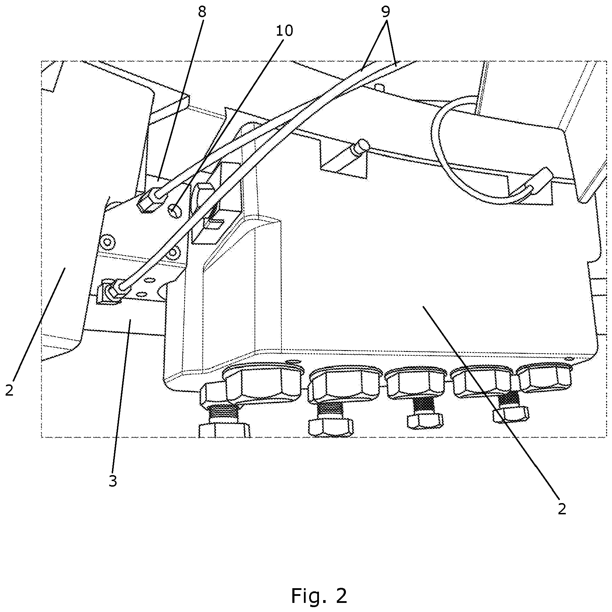

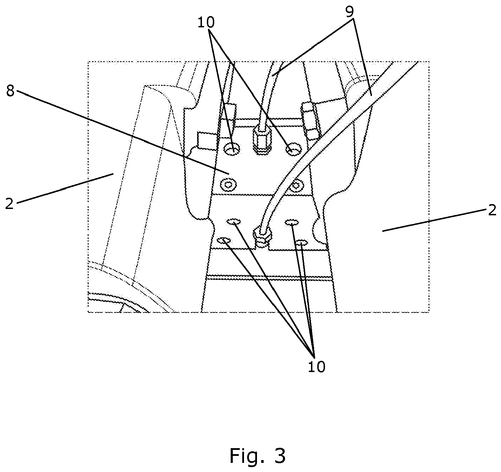

The components 8 are mounted at the yaw system 1 by means of magnets, in a manner which will be described in further detail below with reference to Figs. 2 and 3. During yawing operation, the components 8 move along with the claw beams 2, while they slide along the yaw ring 3. Furthermore, the components 8 are kept in close abutment with the yaw ring 3, due to the magnetic forces provided by the magnets. Thereby it is ensured that lubricant supplied to the components 8 is applied efficiently to the sliding surfaces of the yaw ring 3.

Fig. 2 is a detailed view of the yaw system 1 of Fig. 1. Fig. 2 shows two claw beams 2 with a component 8 mounted between them. It can be seen how the tubes 9 supplying lubricant to the component 8 are attached to the component 8.

The component 8 comprises a number of magnets 10, one of which is visible. The magnets 10 ensure that the component 8 is kept in close abutment with the yaw ring 3, while it is moved along with the claw beams 2 during yawing operation.

Fig. 3 shows the component 8 of the yaw system 1 of Figs. 1 and 2 in more detail. It can clearly be seen how the component 8 is mounted between the two claw beams 2, and six magnets 10 are visible. The magnetic forces provided by the magnets 10 ensure close abutment between the component 8 and two sliding surfaces of the yaw ring 3, thereby ensuring proper lubrication of both of these sliding surfaces.

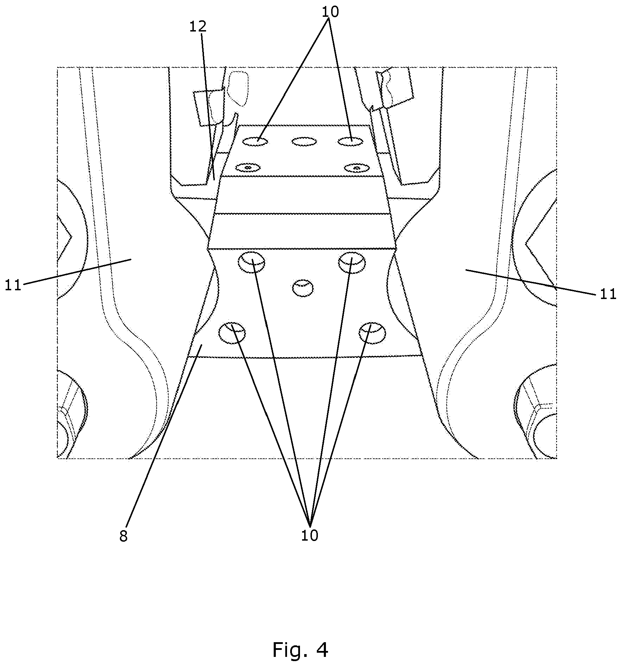

Fig. 4 is a perspective view of a component 8 mounted at a rotating system of a wind turbine according to an alternative embodiment of the invention. The rotating system may be a yaw system, as illustrated in Figs. 1 or 2. However, the rotating system could, alternatively, be another kind of rotating system, such as a pitch system, a main bearing system or a gear system.

The component 8 may, e.g., be or comprise a sensor device, e.g. for measuring a temperature at the rotating system, for measuring wear on the rotating parts, or for measuring any other suitable parameter related to the rotating system. As an alternative, the component 8 may be or comprise a mounting device for mounting a cable or a tube at the rotating system.

The rotating system comprises a first part 11 and a second part 12, arranged to rotate relative to each other. The component 8 is arranged to rotate along with the first part 11 of the rotating system when the first part 11 and the second part 12 rotate relative to each other. The component 8 comprises six magnets 10. The magnets 10 ensure that the component 8 is kept in close abutment with the second part 12. Thus, when the first part 11 and the second part 12 rotate relative to each other, the component 8 slides in close abutment along the second part 12 of the rotating system.

In the case that the component 8 is or comprises a sensor, such as a sensor for measuring wear on the rotating system, the close abutment of the component 8 with respect to the second part 12 ensures that accurate measurements can be performed on the second part of the rotating system.

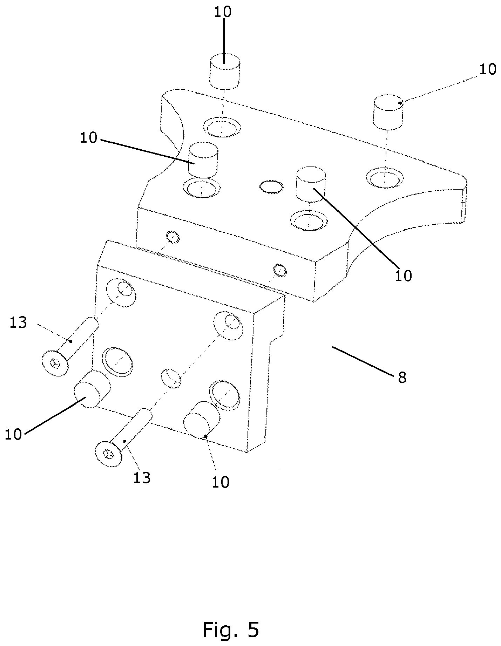

Fig. 5 is an exploded view of the component 8 shown in Fig. 4. It can be seen that the component comprises six magnets 10. Furthermore, the component 8 is provided with two screws 13 for assembling the component 8.

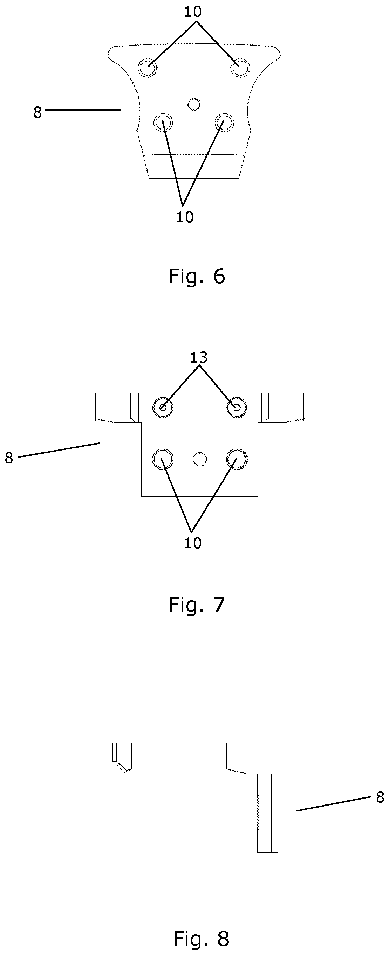

Figs. 6-8 show the component of Fig. 5 from various angles. The shapes of the various parts of the component 8 can be clearly seen, as well as the positions of the magnets 10 and the screws 13.

## Claims

1. A wind turbine comprising a rotating system (1), the rotating system (1) comprising:
- a first part (2, 11) and a second part (3, 12) being arranged to rotate relative to each other, and
- a component (8) comprising at least one magnet (10), said component (8) being attached to the rotating system (1) in such a manner that the component (8) moves along with the first part (2, 11) while sliding along the second part (3, 12) in abutment with the second part (3, 12), the magnetic forces provided by the at least one magnet (10) ensuring the abutment between the component and the second part of the rotating system,
wherein the rotating system (1) is or forms part of a gear system or a generator system, or wherein the rotating system (1) is a bearing system.

2. A wind turbine according to claim 1, wherein at least one of the magnet(s) (10) is a permanent magnet.

3. A wind turbine according to claim 1 or 2, wherein the rotating system (1) is a yaw system.

4. A wind turbine according to claim 1 or 2, wherein the rotating system (1) is a pitch system.

5. A wind turbine according to claim 1 or 2, wherein the rotating system (1) is a main bearing system.

6. A wind turbine according to any of the preceding claims, wherein the component (8) is or forms part of a lubrication system for providing lubrication to the rotating system (1).

7. A wind turbine according to claim 6, wherein the lubrication system comprises nozzles for directing lubricant directly onto one or more sliding surfaces of the rotating system (1).

8. A wind turbine according to claim 6 or 7, wherein the lubrication system comprises two or more components (8) and a lubricant container (6) fluidly connected to each of the two or more components (8) in order to supply lubricant to each of the components (8).

9. A wind turbine according to any of claims 1-5, wherein the component (8) is or comprises a sensor device.

10. A wind turbine according to any of claims 1-5, wherein the component (8) is or comprises a mounting device for mounting a cable or a tube at the rotating system (1).

11. A wind turbine according to any of the preceding claims, wherein the component (8) is attached to the first part by (2, 11) means of magnetic forces provided by at least one further magnet (10).

12. A wind turbine according to any of the preceding claims, wherein the first part (2, 11) of the rotating system (1) and the second part (3, 12) of the rotating system (1) are arranged to rotate relative to each other at a speed within the interval 5 minutes per round to 20 minutes per round.

13. A wind turbine according to any of the preceding claims, wherein the rotating system (1) has a diameter within the interval 1.0 m to 5.0 m.

## Patentansprüche

1. Windkraftanlage, umfassend ein drehendes System (1), das drehende System (1) umfassend:
- einen ersten Teil (2, 11) und einen zweiten Teil (3, 12), die angeordnet sind, relativ zueinander zu drehen, und
- eine Komponente (8), die mindestens einen Magneten (10) umfasst, wobei die Komponente (8) derart an dem drehenden System (1) befestigt ist, dass sich die Komponente (8) gemeinsam mit dem ersten Teil (2, 11) bewegt, während sie entlang des zweiten Teils (3, 12) an dem zweiten Teil (3, 12) anliegend gleitet, wobei die Magnetkraft, die durch den mindestens einen Magneten (10) bereitgestellt wird, das Anliegen zwischen der Komponente und dem zweiten Teil des drehenden Systems sicherstellt,
wobei das drehende System (1) Teil eines Getriebesystems eines Generatorsystems ist oder bildet oder wobei das drehende System (1) ein Lagersystem ist.

2. Windkraftanlage nach Anspruch 1, wobei mindestens einer des (der) Magneten (10) ein Permanentmagnet ist.

3. Windkraftanlage nach Anspruch 1 oder 2, wobei das drehende System (1) ein Giersystem ist.

4. Windkraftanlage nach Anspruch 1 oder 2, wobei das drehende System (1) eine Blattwinkelverstelleinrichtung ist.

5. Windkraftanlage nach Anspruch 1 oder 2, wobei das drehende System (1) ein Hauptlagersystem ist.

6. Windkraftanlage nach einem der vorstehenden Ansprüche, wobei die Komponente (8) Teil eines Schmiersystems zum Bereitstellen einer Schmierung an dem drehenden System (1) ist oder bildet.

7. Windkraftanlage nach Anspruch 6, wobei das Schmiersystem Düsen umfasst, um das Schmiermittel direkt auf eine oder mehr Gleitflächen des drehenden Systems (1) zu lenken.

8. Windkraftanlage nach Anspruch 6 oder 7, wobei das Schmiersystem zwei oder mehr Komponenten (8) und einen Schmiermittelbehälter (6), der strömungstechnisch mit jeder der zwei oder mehr Komponenten (8) verbunden ist umfasst, um jeder der Komponenten (8) Schmiermittel zuzuführen.

9. Windkraftanlage nach einem der Ansprüche 1-5, wobei die Komponente (8) eine Sensorvorrichtung ist oder umfasst.

10. Windkraftanlage nach einem der Ansprüche 1-5, wobei die Komponente (8) eine Montagevorrichtung zum Montieren eines Kabels oder eines Rohrs an dem drehenden Systems (1) ist oder umfasst.

11. Windkraftanlage nach einem der vorstehenden Ansprüche, wobei die Komponente (8) an dem ersten Teil (2, 11) durch Magnetkräfte befestigt ist, die durch mindestens einen weiteren Magneten (10) bereitgestellt werden.

12. Windkraftanlage nach einem der vorstehenden Ansprüche, wobei der erste Teil (2, 11) des drehenden Systems (1) und der zweite Teil (3, 12) des drehenden Systems (1) angeordnet sind, relativ zueinander bei einer Geschwindigkeit innerhalb des Intervalls von 5 Minuten pro Runde bis 20 Minuten pro Runde zu drehen.

13. Windkraftanlage nach einem der vorstehenden Ansprüche, wobei das drehende System (1) einen Durchmesser innerhalb des Intervalls von 1,0 m bis 5,0 m aufweist.

## Revendications

1. Éolienne comprenant un système rotatif (1), le système rotatif (1) comprenant :
- une première partie (2, 11) et une seconde partie (3, 12) étant agencées pour tourner l'une par rapport à l'autre, et
- un composant (8) comprenant au moins un aimant (10), ledit composant (8) étant attaché au système rotatif (1) de telle sorte que le composant (8) se déplace avec la première partie (2, 11) tout en coulissant le long de la seconde partie (3, 12) en butée avec la seconde partie (3, 12), les forces magnétiques fournies par l'au moins un aimant (10) assurant la butée entre le composant et la seconde partie du système rotatif,
dans laquelle le système rotatif (1) est ou forme une partie d'un système d'engrenage ou d'un système générateur, ou dans laquelle le système rotatif (1) est un système de palier.

2. Éolienne selon la revendication 1, dans laquelle au moins un du ou des aimant(s) (10) est un aimant permanent.

3. Éolienne selon la revendication 1 ou 2, dans laquelle le système rotatif (1) est un système d'orientation.

4. Éolienne selon la revendication 1 ou 2, dans laquelle le système rotatif (1) est un système de calage.

5. Éolienne selon la revendication 1 ou 2, dans laquelle le système rotatif (1) est un système de palier principal.

6. Éolienne selon l'une quelconque des revendications précédentes, dans laquelle le composant (8) est ou forme une partie d'un système de lubrification pour fournir de la lubrification au système rotatif (1).

7. Éolienne selon la revendication 6, dans laquelle le système de lubrification comprend des buses pour diriger du lubrifiant directement sur une ou plusieurs surfaces coulissantes du système rotatif (1).

8. Éolienne selon la revendication 6 ou 7, dans laquelle le système de lubrification comprend deux ou plusieurs composants (8) et un conteneur de lubrifiant (6) relié à fluide à chacun des deux ou plusieurs composants (8) afin de fournir du lubrifiant à chacun des composants (8).

9. Éolienne selon l'une quelconque des revendications 1 à 5, dans lequel le composant (8) est ou comprend un dispositif de détection.

10. Éolienne selon l'une quelconque des revendications 1 à 5, dans laquelle le composant (8) est ou comprend un dispositif de montage pour monter un câble ou un tube au niveau du système rotatif (1).

11. Éolienne selon l'une quelconque des revendications précédentes, dans laquelle le composant (8) est attaché à la première partie (2, 11) au moyen de forces magnétiques fournies par au moins un aimant supplémentaire (10).

12. Éolienne selon l'une quelconque des revendications précédentes, dans laquelle la première partie (2, 11) du système rotatif (1) et la seconde partie (3, 12) du système rotatif (1) sont agencées pour tourner l'une par rapport à l'autre à une vitesse dans les limites de l'intervalle de 5 minutes par rotation à 20 minutes par rotation.

13. Éolienne selon l'une quelconque des revendications précédentes, dans laquelle le système rotatif (1) a un diamètre dans les limites de l'intervalle de 1,0 m à 5,0 m.
